# EUROPEAN PATENT SPECIFICATION

(11) **EP 0 499 351 B1**
(45) Date of publication and mention of the grant of the patent: **05.10.1994**
(21) Application number: 92250029.3
(22) Date of filing: 13.02.1992
(51) Int. Cl.: B01J 38/48, B01J 38/62, B01D 53/36

(54) **Method for treating a solution used for the regeneration of a denitration catalyst**
Verfahren zur Behandlung einer Lösung, angewendet zum Regenerieren eines Denitrierungskatalysators
Procédé pour le traitement d'une solution, utilisée pour la régénération d'un catalyseur de dénitration

(30) Priority: 15.02.1991 JP 22044/91
(43) Date of publication of application: 19.08.1992
(73) Proprietor: MITSUBISHI JUKOGYO KABUSHIKI KAISHA, Tokyo (JP)
(72) Inventor: Obayashi, Yoshiaki, c/o Hiroshima Techn. Institute, Nishi-ku, Hiroshima, Hiroshima Pref (JP); Iida, Kouzo, c/o Hiroshima Techn. Institute, Nishi-ku, Hiroshima, Hiroshima Pref (JP)
(74) Representative: Meissner, Peter E., Dipl.-Ing.

(56) References cited:
- EP-A- 0 136 966
- EP-A- 0 161 206
- DE-C- 3 539 001

## Description

### FIELD OF THE INVENTION AND RELATED ART STATEMENT

The present invention relates to a method for treating a catalyst regeneration solution for a catalyst which has been used to remove nitrogen oxides from an exhaust gas.

In recent years, much attention has been paid to nitrogen oxides (hereinafter referred to as "NOₓ") in an exhaust gas as a cause of photochemical smog, and various techniques for removing these NOₓ have been suggested. Of these techniques, many catalytic reduction methods have been already put into practice in which NOₓ is reduced to harmless nitrogen in the presence of a catalyst by the use of ammonia as a reducing agent. Typical examples of the catalyst which can be used in these methods are a vanadium-tungsten-titania catalyst and a tungsten-titania catalyst.

However, in a combustion exhaust gas of a fuel oil such as fuel oil C containing sulfur in a high ratio, there is dust containing heavy metals such as vanadium, nickel and iron and an alkaline salt such as Glauber's salt (Na₂SO₄·10H₂O). Therefore, when this kind of exhaust gas is treated for a long period of time, components of the dust adhere to and accumulate on the surface of the catalyst. As a result, a denitration performance of the catalyst deteriorates, or an SO₂ oxidation performance (an SO₂ oxidation rate) of the catalyst rises.

It is known that the deterioration of the denitration performance of the catalyst is usually due to the accumulation of alkaline components such as sodium and potassium on the catalyst. Furthermore, it is also known that the rise of the SO₂ oxidation performance of the catalyst is due to the accumulation of heavy metal components such as vanadium, nickel and iron on the catalyst.

The "SO₂ oxidation performance" of the catalyst means an ability (or a performance) of the catalyst to oxide SO₂ in the exhaust gas to SO₃.

When the SO₂ oxidation performance of the catalyst rises, the amount of SO₃ in the exhaust gas on the downstream side of a denitration apparatus increases, and it is discharged in the state of sulfuric acid white fume into the open air to cause air pollution. Thus, in order to prevent the air pollution, NH₃ (ammonia) is injected on the upstream side of an electric dust collector to produce ammonium sulfate or ammonium bisulfate, and the thus produced compound is collected and removed by the electric dust collector.

However, when the discharge amount of SO₃ increases beyond the collection capability of the electric dust collector, the sulfuric acid white fume is discharged in the form of dust into the open air, so that the dust concentration in the exhaust gas may exceed a maximum allowable value set by pertinent regulations.

The catalyst whose denitration performance has deteriorated or whose SO₂ oxidation performance has risen is no longer usable, and it will have to be disposed of or must be subjected to an economical regeneration treatment. Heretofore, as a regeneration treatment for the catalyst, water washing has been suggested for the removal of alkaline components, and washing with an aqueous oxalic acid solution has been suggested for the removal of heavy metal components mainly comprising vanadium. These treatments have been recognized to be effective.

For the removal of the alkaline components, water washing has been now put into practice. However, for the removal of heavy metal components mainly comprising vanadium, a great deal of cost is required to treat the aqueous oxalic acid solution containing the heavy metals after the regeneration. This is the reason why the latter means has not been put into practice yet.

In regenerating the catalyst whose denitration performance has deteriorated or whose SO₂ oxidation performance has risen, it is naturally necessary to recover the performance, and another requirement is to achieve the regeneration at a low cost.

However, it is observed that water or the aqueous oxalic acid solution which has been used for the regeneration is colored probably owing to vanadium, the former being colored yellow, the latter being colored deep blue. In addition, these solutions contain heavy metal elements, such as iron, which are severely restricted under governmental regulations regarding factory liquid wastes, and therefore they cannot be discharged as they are. These waste solutions must be treated prior to the discharge by a proper process so that the content of the heavy metal elements becomes below the regulated level, but for such a treatment, facilities and a heavy cost are required, which is disadvantageous from an economical viewpoint.

### OBJECT AND SUMMARY OF THE INVENTION

The present invention intends to provide a rational treatment method for the regeneration solution of a deteriorated denitration catalyst in view of the above-mentioned technical level.

The present invention provides a method for treating a denitration catalyst regeneration solution which is characterized by injecting, the solution alone or as a mixture with a fuel into a boiler, oxidizing the heavy metal elements contained in the solution to fine particles of oxides in the high temperature atmosphere of said boiler, passing said fine particles together with the exhaust gas via a catalyst layer into an electric dust collector for removing the fine particles together with unburned carbon and discharging the exhaust gas.

According to this method the aqueous solution containing the heavy metals produced while regenerating the catalyst can be treated at a low cost.

Vanadium, nickel and iron are accumulated in the form of sulfates or oxides on the surface of the catalyst, and vanadium compounds occupy 80% or more of these compounds. As a means for dissolving the vanadium compound, it is most effective to use the aqueous oxalic acid solution. According to the results of experiments which the present inventors have carried out, water can only dissolve 20% of the vanadium compound, but when the vanadium compound is allowed to stand in a 1 N aqueous oxalic acid solution at room temperature for 4 hours, it can be dissolved substantially completely therein, as shown by the following chemical reaction (1):

V₂O₅ + 4H₂C₂O₄ → H₂(VO₂)₂(C₂O₄)₃ + 3H₂O + CO₂ (1)

The amount of oxalic acid which is consumed for the dissolution of the vanadium compound is merely several percent of the total amount, and unreacted oxalic acid remains in the aqueous solution. Oxalic acid is an acid, and naturally its aqueous solution indicates acidity. Therefore, prior to the discharge into a public sewerage, oxalic acid must be neutralized with an alkali reagent, such as sodium hydroxide. In addition, costly facilities and high operational costs are required for a precipitation treatment of the dissolved heavy metal elements and the like.

On the contrary, according to the present invention, unreacted oxalic acid is oxidized and decomposed to harmless water and a carbon dioxide gas, as shown by the following reaction (2):

2H₂C₂O₄ + O₂ → 2H₂O + 4CO₂ (2)

Also, the heavy metal elements dissolved in oxalic acid become stable oxides, and they are collected by a dust collector on the downstream side and then treated at a low cost, as in the case of inorganic compounds in the fuel and unburned carbon.

As described above, according to the present invention, the regeneration cost of a catalyst can be decreased by a simple method in which a catalyst regeneration solution is injected into the boiler furnace, which makes it practicable to remove the accumulated heavy metal components from the denitration catalyst with aqueous oxalic acid solution or water.

### BRIEF DESCRIPTION OF THE DRAWING

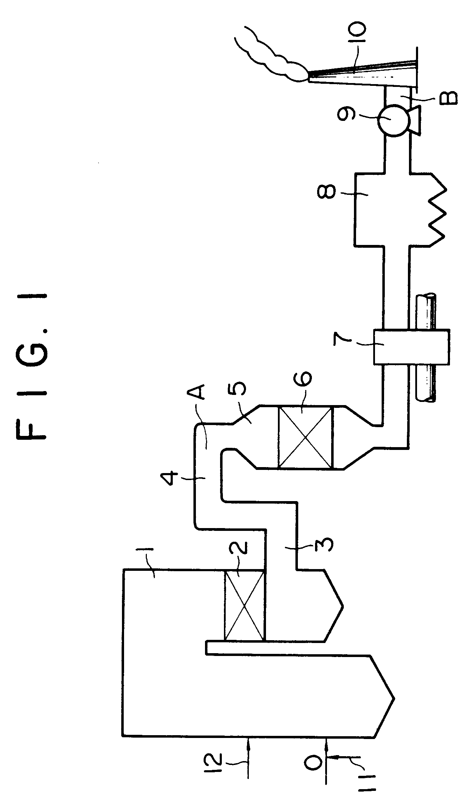

Fig. 1 shows a flow sheet of an exhaust gas treatment by the use of a fuel oil-fired boiler in an embodiment for the description of the present invention.

### DETAILED DESCRIPTION OF PREFERRED EMBODIMENTS

Next, the present invention will be described in reference to a flow sheet of an exhaust gas treatment by the use of a fuel oil-fired boiler shown in Fig. 1. A catalyst regeneration treatment solution is injected into a boiler 1 through a treatment solution injection line 11 connected to an injection line for fuel oil 0 or through a treatment solution injection line 12 disposed in the vicinity of a combustion burner. This catalyst regeneration treatment solution is obtained according to the procedure mentioned above. Heavy metal elements contained in the treatment solution become fine particles of oxides in a high-temperature atmosphere of the boiler 1, and they then pass through a flue 3 via an economizer outlet 2 together with an exhaust gas, and then reach an electric dust collector 8 via conduits 4 and 5, a gas parallel flow catalyst layer 6, and an air heater 7. In the electric dust collector 8, the fine particles of the oxides of the heavy metal elements are removed together with fine particles of unburned carbon contained in the exhaust gas, and the exhaust gas which has been made harmless is then discharged into the open air through an exhaust gas blower 9 and a chimney 10.

In this connection, oxidized heavy metals, such as vanadium, may adhere to and accumulate on the surface of the catalyst 6, when they pass over the surface of the gas parallel flow catalyst layer 6. However, the amount of the adhered and accumulated heavy metals is so small that their negative influence can be ignored.

### Test Example 1

A TiO₂-WO₃-V₂O₅ catalyst was treated with a 1 N aqueous oxalic acid solution by the use of a fuel oil-fired boiler shown in Fig. 1, and in this case, the composition change of the catalyst is set forth in Table 1.

**Table 1**

| | TiO₂ | WO₃ | V₂O₅ |
|---|---|---|---|
| Early Stage | 88.9 | 10.5 | 0.6 |
| Before Regeneration | 88.2 | 10.4 | 1.4 |
| After Regeneration | 88.8 | 10.5 | 0.7 |

The 1 N aqueous oxalic acid solution which was used for the regeneration contained 620 mg/liter of vanadium. This aqueous oxalic acid solution was added to a fuel oil in such an amount as not to impede combustion (about 1/1000 in weight ratio), followed by mixing sufficiently. The fuel containing oxalic acid was then injected continuously into the boiler 1 together with the fuel oil through an injection line 11.

The exhaust gas was sampled at point A of the flue and then analyzed to find the concentration of organic carbon in the gas so as to determine whether or not oxalic acid remains therein. Furthermore, the dust in the exhaust gas was collected at point B of the flue and then analyzed for vanadium. The results are set forth in Table 2.

### Test Example 2

A 1 N aqueous oxalic acid solution which was used in regeneration under the same conditions as in Test Example 1 was injected at a position in the vicinity of a combustion burner of a boiler 1 through an injection line 12 shown in Fig. 1. Analysis was carried out in the same manner as in Test Example 1, and the results are set forth in Table 2.

### Test Example 3

The same inactivated TiO₂-WO₃-V₂O₅ catalyst as in Test Example 1 was treated with water, and in this case, the water contained 100 mg/liter of vanadium. This treatment water was injected into a boiler 1 together with fuel oil as in Test Example 1. Analysis was carried out in the same manner as in Test Example 1, and the results are set forth in Table 2.

### Comparative Example

The same procedure as in Test Example 1 was effected except that any regeneration solution was not injected into a boiler 1, and analysis was also carried out as in Test Example 1. The results are set forth in Table 2.

**Table 2**

| | Organic Carbon (in terms of C)(ppm) | V₂O₅ (mg/Nm³) |
|---|---|---|
| Test Example 1 | 5.0 | <1.0 |
| Test Example 2 | 5.0 | <1.0 |
| Test Example 3 | 5.0 | <1.0 |
| Comp. Example 1 | 5.0 | <1.0 |

It is apparent from the analytical results that in Test Examples 1 to 3, oxalic acid was completely decomposed to a carbon dioxide gas in the furnace and made harmless, and that vanadium in the regeneration solution was all collected by the electric collector and then made harmless.

## Claims

1. A method for treating a denitration catalyst regeneration solution comprising the steps:
- injecting the solution alone or as a mixture with a fuel into a boiler (1),
- oxidizing the heavy metal elements contained in the solution to fine particles of oxides in the high temperature atmosphere of said boiler (1)
- passing said fine particles together with the exhaust gas via a catalyst layer (6) into an electric dust collector (8) for removing the fine particles together with unburned carbon and
- discharging the exhaust gas.

## Patentansprüche

1. Verfahren zur Behandlung einer Regenerationslösung von einem Denitrierungskatalysator,
gekennzeichnet durch folgende Schritte:
- Einspritzen der Lösung allein oder als Mischung mit einem Brennstoff in einen Kessel (1),
- Oxidieren der in der Lösung enthaltenen Schwermetallelemente zu feinpartikligen Oxiden in der Hochtemperaturatmosphäre von dem Kessel (1),
- Einströmen der feinen Parikel zusammen mit dem Abgas über eine Katalysatorschicht (6) in einen elektrischen Staubkollektor (8) zum Entfernen der feinen Partikel zusammen mit unverbranntem Kohlenstoff und
- Ausblasen des Abgases.

## Revendications

1. Procédé pour traiter une solution de régénération de catalyseur de dénitrification, comprenant les étapes consistant à :
- injecter la solution seule ou sous forme d'un mélange avec un combustible dans une chaudière (1),
- oxyder les éléments métalliques lourds contenus dans la solution en fines particules d'oxydes dans l'atmosphère à haute température de ladite chaudière (1),
- faire passer lesdites fines particules en même temps que le gaz d'échappement via une couche de catalyseur (6) dans un collecteur de poussière électrique (8) pour retirer les fines particules en même temps que le carbone non brûlé, et
- évacuer le gaz d'échappement.
